# EUROPÄISCHE PATENTSCHRIFT

(11) **EP 2 550 241 B1**
(45) Veröffentlichungstag und Bekanntmachung des Hinweises auf die Patenterteilung: **01.03.2017**
(21) Anmeldenummer: 11724360.0
(22) Anmeldetag: 18.03.2011
(51) Int. Cl.: C04B 35/111, C04B 35/26, C04B 35/453, C04B 35/58, C04B 38/06

(54) **ZINKOXIDMATERIAL**
ZINC OXIDE MATERIAL
MATERIAUX EN OXYDE DE ZINC

(30) Priorität: 22.03.2010 DE 102010012385
(43) Veröffentlichungstag der Anmeldung: 30.01.2013
(73) Patentinhaber: Christian-Albrechts-Universität zu Kiel, 24118 Kiel (DE)
(72) Erfinder: ADELUNG, Rainer, 24147 Kiel (DE); KAPS, Sören, 24232 Schönkirchen (DE); MISHRA, Yogendra Kumar, 24114 Kiel (DE); CLAUS, Maria, 24114 Kiel (DE); PREUSSE, Thomas, 24113 Kiel (DE); WOLPERT, Charline, 24536 Neumünster (DE)
(74) Vertreter: Hansen, Jochen
(86) Internationale Anmeldenummer: PCT/DE2011/000282
(87) Internationale Veröffentlichungsnummer: WO 2011/116751

(56) Entgegenhaltungen:
- DE-T2- 68 926 494
- HSU Y ET AL: "Dye-sensitized solar cells using ZnO tetrapods", JOURNAL OF APPLIED PHYSICS, AMERICAN INSTITUTE OF PHYSICS. NEW YORK, US, Bd. 103, Nr. 8, 24. April 2008 (2008-04-24), Seiten 83114-83114, XP012110499, ISSN: 0021-8979, DOI: 10.1063/1.2909907
- KITANO M ET AL: "Growth of large tetrapod-like ZnO crystals - I. Experimental considerations on kinetics of growth", JOURNAL OF CRYSTAL GROWTH, ELSEVIER, AMSTERDAM, NL, Bd. 102, Nr. 4, 1. Juni 1990 (1990-06-01), Seiten 965-973, XP024473572, ISSN: 0022-0248, DOI: 10.1016/0022-0248(90)90867-K [gefunden am 1990-06-01]
- J. Y. Lao ET AL: "Hierarchical oxide nanostructures", Journal of Materials Chemistry, vol. 14, no. 4, 1 January 2004 (2004-01-01), page 770, XP055252911, GB ISSN: 0959-9428, DOI: 10.1039/b311639e
- DU G P ET AL: "Synthesis of tetrapod-shaped ZnO whiskers and microrods in one crucible by thermal evaporation of Zn/C mixtures", TRANSACTIONS OF NONFERROUS METALS SOCIETY OF CHINA, NONFERROUS METALS SOCIETY OF CHINA, CN, vol. 18, no. 1, 1 February 2008 (2008-02-01), pages 155-161, XP022936158, ISSN: 1003-6326, DOI: 10.1016/S1003-6326(08)60028-X [retrieved on 2008-02-01]

## Beschreibung

Die Erfindung betrifft ein Material mit einem auf Partikelebene durch Nanobrücken zwischen Partikeln überbrückten Porenraum nach dem Oberbegriff des Hauptanspruches.

Flexible Materialien sind gewöhnlich organische oder siliziumorganische Verbindungen mit großen molekularen Kettenlängen. Wird neben Flexibilität auch Hitzebeständigkeit gefordert, so verwendet man gemeinhin Poly(organo)siloxane, besser bekannt als Silikone, z.B. in einer stärker vernetzten Form, dem Silikonharz. Silikonharze zeigen Elastizität bis hin zu einigen 100 °C und können bis etwa 600 °C stabil bleiben. Bei höheren Temperaturen erfolgt jedoch die Zersetzung unter Bildung von Kieselsäure.

Die WO 2009/054995 A1 lehrt, dass bestimmte Mixturen aus Silikonharz und Keramikpartikeln geeignet sind, sowohl Elastizität als auch Hitzebeständigkeit im so genannten "red heat" Bereich (600 - 1000 °C) zu gewährleisten. Allerdings geht dabei die Flexibilität der Komposite bei Temperaturen oberhalb von 600 °C dauerhaft verloren. Das Komposit wird dann durch Pyrolyse in eine feste Keramik überführt.

Ein Material, das eine in etwa gleich bleibende Flexibilität im Bereich zwischen Raumtemperatur und 1000 °C und mehr aufweist und diese auch bei mehrfachem Erwärmen und Abkühlen beibehält, ist dem Stand der Technik anscheinend noch nicht bekannt.

Die Materialwissenschaften kennen indes Mikro- und Nanostrukturen, die vollständig anorganisch sind, aber zugleich elastische Eigenschaften besitzen, die sie auch bei sehr hohen Temperaturen nicht einbüßen. Insbesondere sind Mikropartikel bekannt, bei denen es zur Ausbildung anorganischer (kristalliner oder amorpher) Strukturen aus der Partikeloberfläche kommt, die man als "Stacheln" oder "Whisker" bezeichnen kann.

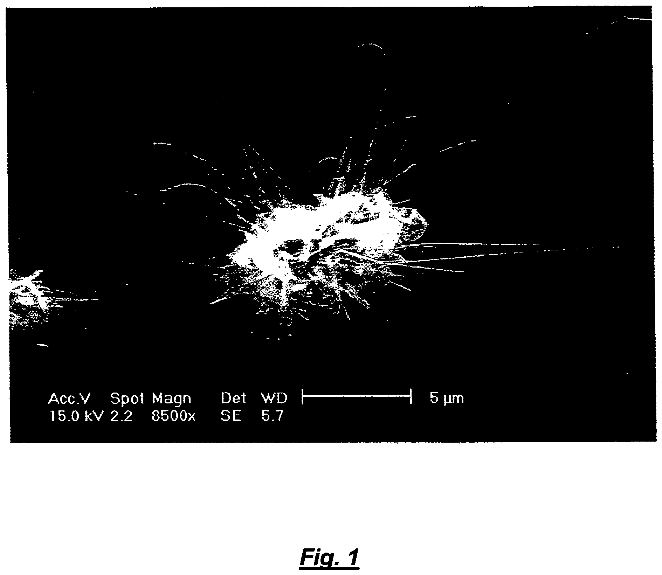

Ein prominentes Beispiel ist ein Mikropartikel aus Zink, von dem ausgehend Stacheln aus Zinkoxid von der Partikeloberfläche weg wachsen (Fig. 1). Die Stacheln sind monokristallin, dabei aber durchaus flexibel aufgrund ihrer Aspektverhältnisse, vergleichbar etwa mit Glasfasern. Man kann die Stacheln in entsprechender Weise bewegen und durchbiegen, ohne dass sie abbrechen (M. Riaz, A. Fulati, G. Amin, N. H. Alvi, O. Nur, M. Willander, "Buckling and elastic stability of vertical ZnO nanotubes and nanorods,"J. Appl. Phys. 034309 (2009*) und* Özgür et al., "A. comprehensive review of ZnO materials and devices", J. Appl. Phys. 98, 041301 (2005)).

Die DE 689 26 494 T2 beschreibt Schallschutzmaterial, basierend auf Zinkoxidtetrapods. Dabei wird eine Mischung oder Dispersion von den besagten Zinkoxid-Wiskerteilchen mit einem Füllstoff oder ein tragendes Teil mit ZnO-Wiskerteilchen, die durch das tragende Teil in räumlicher Hinsicht gestützt sind, benannt.

HSU Y ET AL: "Dye-sensitized solar cells using ZnO tetrapods", JOURNAL OF APPLIED PHYSICS, AMERICAN INSTITUTE OF PHYSICS. NEW YORK, US, Bd. 103, Nr. 8, 24. April 2008 (2008-04-24), Seiten 83114-83114, XP012110499, DOI: 10.1063/1.2909907 zeigt die Herstellung von Solarzellen, enthaltend beschichtete Substrate. Die Beschichtung ist eine poröse ZnO-Tetrapod-Schicht. Dabei werden Einzeltetrapoden erzeugt und mit einer Lösung aus Zinkacetat und Ethanol vermischt und anschließend auf 200 °C erhitzt.

Eine Herstellungsweise für ZnO-tetrapods ist in KITANO M ET AL: "Growth of large tetrapods-like ZnO crystals - I. Experimental considerations on kinetics of growth", JOURNAL OF CRYSTAL GROWTH, ELSEVIER, AMSTERDAM, NL BD. 102, Nr. 4, 1. Juni 1990 (1990-06-01), Seiten 965-973, XP024473572, DOI: 10.1016/0022-0248(90)90867-K beschrieben.

Bei den Druckschriften J.Y. Lao ET AL:" Hierarchial oxide nanostructures", Journal of Materials Chemistry, Bd. 14, Nr. 4, 1. Januar 2004 (2004-01-01), Seite 770, XP055252911, GB ISSN: 0959-9428, DOI: 10.1039/b311639e und DU G P ET AL: "Synthesis of tetrapod-shaped ZnO whiskers and microrods in one crucible by thermal evaporation of Zn/C mixtures", TRANSACTIONS OF NONFERROUS METALS SOCIETY OF CHINA, NONFERROUS METALS SOCIETY OF CHINA, CN, Bd. 18, Nr. 1, 1. Februar 2008 (2008-02-01), Seiten 155-161, XP022936158, ISSN: 1003-6326, DOI: 10.1016/S1003-6326(08)60028-X [gefunden am 2008-02-01] handelt es sich um wissenschaftliche Arbeiten zu ZnO-Mikropartikeln und ihren Eigenschaften. Dabei sind auch vereinzelte Durchdringungen von Stacheln beobachtet worden.

Kern-Stachel-Partikel sind immer dann zu erwarten, wenn ein schnelles Kristallwachstum stattfinden kann. Eine Möglichkeit, die Erzeugung von Kern-Stachel-Partikeln für nahezu jedes metallische oder halbleitende Material zu forcieren, liegt in der Beschichtung mit Katalysator-Partikeln (typisch: Edelmetalle, vorzugsweise Gold). Beim so genannten Vapour-Liquid-Solid (VLS) Prozess (siehe http://en.wikipedia.org/wiki/Vapor-Liquid-Solid_method) bilden sich dann kristalline Strukturen an der Unterseite eines flüssigen Katalysator-Tropfens, der dabei vom Substrat, auf dem er zuvor platziert wurde, abgehoben wird (Dae-Ho Rho, Jae-Soo Kim,Dong-Jin Byun, Jae-Woong Yang,Jae-Hoon Lee, Na-Ri Kim, "Growth and Characterization of SiOx nanowires by VLS and SLS growth mechanism" Mater. Res. Soc. Symp. Proc. 832, F7.17.1 (2005)). Man kann insbesondere Metallmikropartikel mit katalytisch wirksamen Nanopartikeln versehen, um Stacheln auf den Mikropartikeln wachsen zu lassen.

Die Aufgabe der Erfindung ist es, ein flexibles und hitzebeständiges Material anzugeben.

Die Aufgabe wird gelöst durch ein Material mit den Merkmalen des Hauptanspruchs. Der Unteranspruch gibt Ausgestaltung an.

Das erfindungsgemäße Material ist dadurch gekennzeichnet, dass es aus Kernen besteht, die jeweils in verschiedene Raumrichtungen vom Kern ausgehende, anorganische, flexible, längliche Strukturen (i. F. Stachel) aufweisen, wobei die Kerne durch die Stachel voneinander separiert und miteinander flexibel verbunden sind. Ein Stachel ist im Sinne der Erfindung flexibel, wenn sein Aspektverhältnis (Länge/Maximaldurchmesser) größer als 10 ist.

Das erfindungsgemäße Material umfasst ausdrücklich keine Matrix, in der die Kerne eingebettet sind. Der Porenraum des Materials wird durch den Zwischenraum zwischen den Kernen gebildet, lediglich von den flexiblen Stacheln unterbrochen bzw. gestützt und ist vollständig zusammenhängend. Unter Druckbeaufschlagung ist der Porenraum kompressibel, er kehrt jedoch in seinen Ausgangszustand zurück, sobald die Beaufschlagung endet. Dies macht die Flexibilität des Materials aus, die auch im Bereich zwischen 600 °C und 1000 °C oder sogar darüber erhalten bleibt.

Vorzugsweise beträgt der Porenraum in Abwesenheit einer Druckbeaufschlagung (bei Normaldruck) mindestens 50 % des Materialvolumens.

Der Zusammenhalt des erfindungsgemäßen Materials entsteht während der Herstellung durch das Ineinanderwachsen oder Durchdringen von Stacheln während des Kristallwachstums. Die Verbindungen zwischen den Kernen sind sehr stabil, das Material ist kratz- und abriebfest. Der Zusammenhalt ist dadurch gekennzeichnet, dass die flexiblen, länglichen Stacheln, die von verschiedenen - meist direkt benachbarten - Kernen ausgehen, durch Durchdringung während des Kristallwachstums miteinander verbunden sind. Ebensogut kann es vorkommen, dass der Stachel eines Kerns direkt in den nächsten Kern eingewachsen ist.

Das erfindungsgemäße Material kann mit einem Kettenhemd auf Mikroskala verglichen werden. Starre Kettenglieder (hier: die Kerne) sind über die länglichen Stacheln gegeneinander beweglich aber zugleich zugfest mit ihren Nachbarn verbunden.

Auf den Durchmesser der Kerne kommt es im Prinzip nicht an, solange die Stachel lang genug sind (insbes. Aspektverhältnis größer als 10), um eine flexible Separierung der Kerne sicherzustellen. So können die Kerne beispielsweise Mikropartikel aus einem Metalloxid (ggf. mit einem metallischen Kern) von 5 µm Durchmesser sein, oder aber die Kerne sind in ihrem Durchmesser auf den der Stacheln reduziert. Einen Kern zeichnet aus, dass mehrere flexible Stacheln aus verschiedenen Raumrichtungen in ihm zusammenlaufen bzw. von ihm ausgehen.

Das erfindungsgemäße Material zeigt für Kerne mit dem Durchmesser der Stacheln die größte Flexibilität. In diesem Fall weist die Mehrzahl der Kerne genau vier Stacheln auf, die jeweils paarweise denselben Winkel miteinander einschließen (Tetrapods).

Zur Verdeutlichung der Erfindung dienen die nachfolgenden Elektronenmikroskop-Aufnahmen. Dabei zeigt:
- Fig. 1: eine Aufnahme eines Kern-Stachel-Partikels aus ZnO. Die abstehenden Fäden sind kristalline ZnO-Stachel, die sich bruchfrei biegen lassen;
- Fig. 2: zwei Aufnahmen von ZnO-Lamellen auf einem Zink-Substrat in verschiedenen Vergrößerungen. Das gegenseitige Durchdringen ist bei den mit Pfeilen markierten Lamellen zu erkennen. Die Lamellen wurden mit einem VLS Verfahren erzeugt;
- Fig. 3: eine Schicht aus dem neuen Material in drei Vergrößerungen. Die Kerne aus ZnO berühren einander nicht, der Zwischenraum wird von Stacheln aus ZnO gestützt;
- Fig. 4: einen Ausschnitt aus einem Material, bei dem die Kerne denselben Durchmesser wie die Stacheln aufweisen. Dieses Material formt ein sich über mehrere Millimeter erstreckendes Netzwerk. Der Draht im Bild hat einen Durchmesser von 100 µm und ist für die Elastizitätstests verwendet worden;

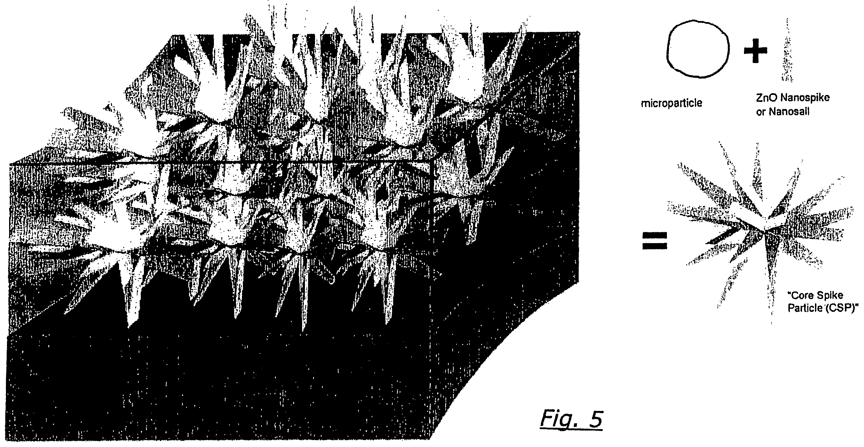

- Fig. 5: schematische Darstellungen zu ,core spike particles' (CSP, Kern-Stachel-Partikeln);

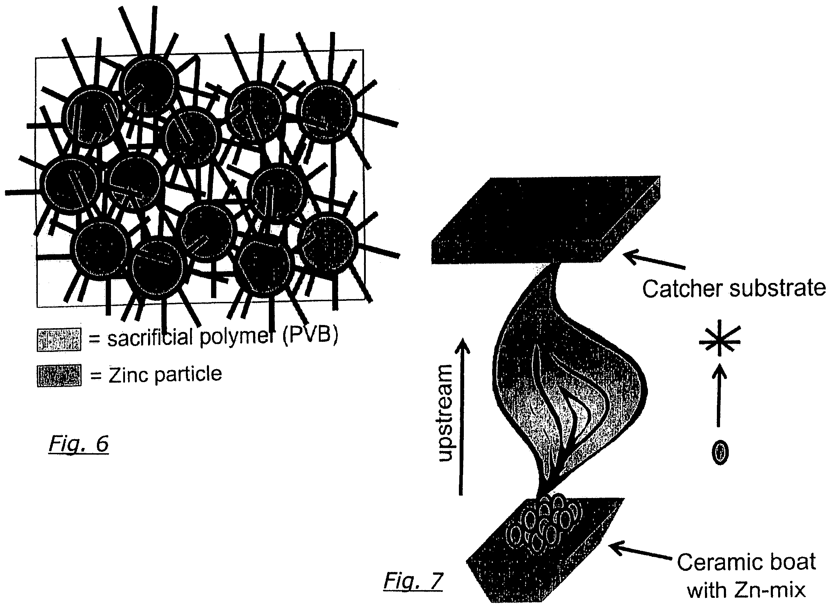

- Fig. 6: eine schematische Darstellung bei Partikeln, deren Durchmesser die Dicke der Nanobrücken selbst um das fünf- bis 15fache übersteigt,

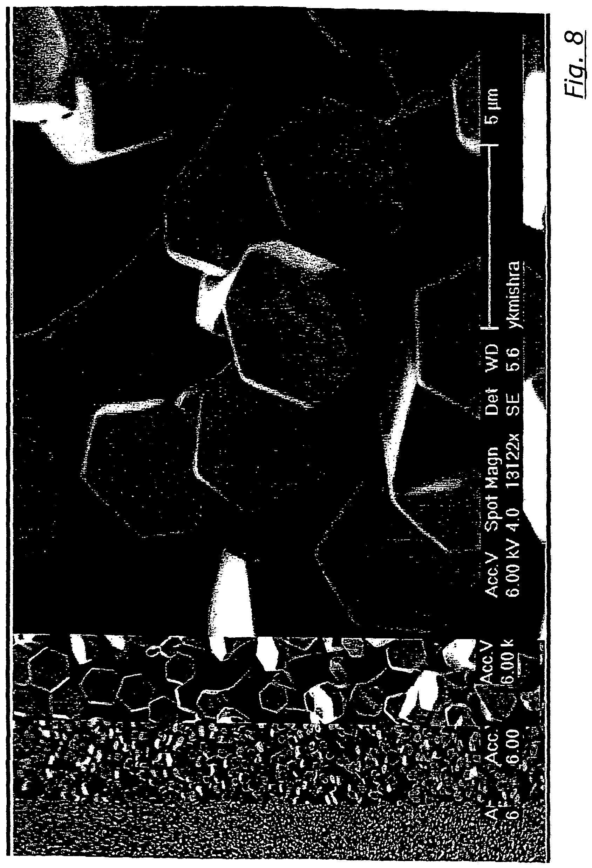

- Fig. 7: eine Prinzipskizze der Erzeugung mittels ,flame transport synthesis' (Flammentransport-Snthese);

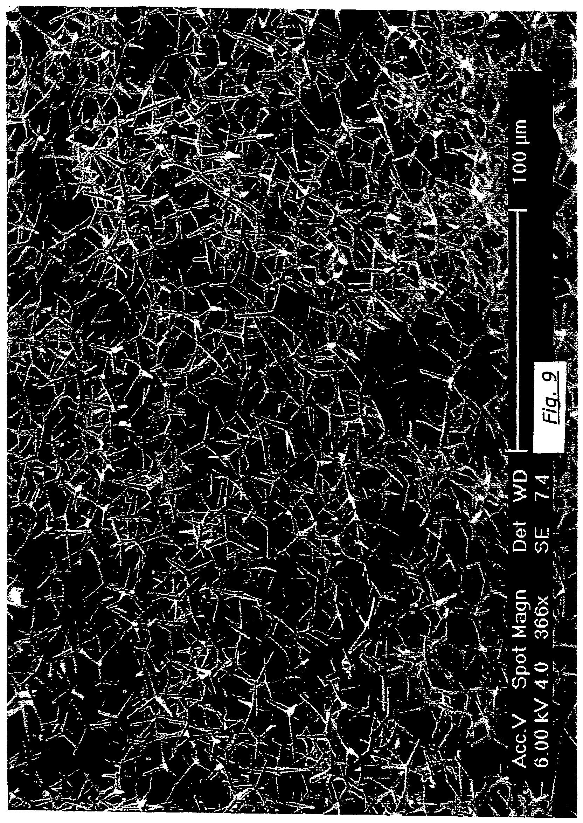

- Fig. 8: nagelartige Strukturen mit sechseckigen 'Köpfen' erzeugt mittels ,flame transport synthesis'; und
- Fig. 9: eine Struktur aus ZnO-Tetraponden.

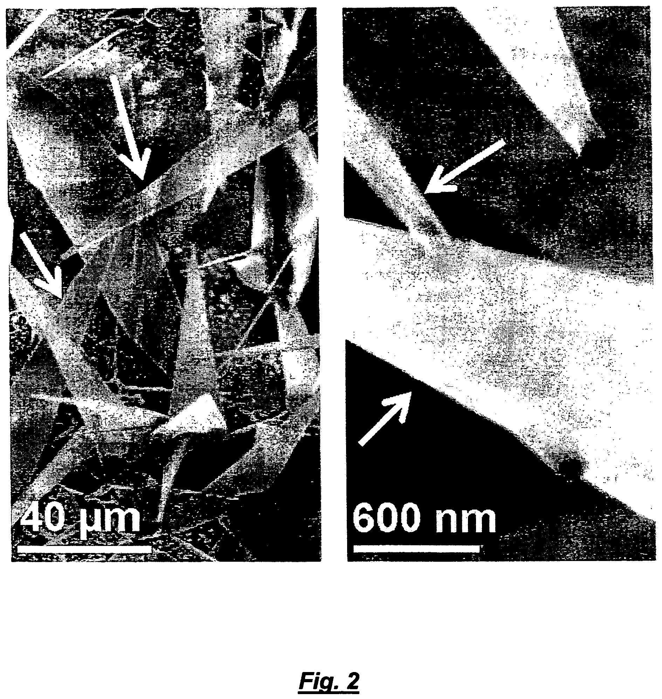

Bei der Erzeugung des erfindungsgemäßen Materials können Stacheln benachbarter Partikel einander während ihres Wachstums ohne weiteres durchdringen, wie Fig. 2 am Beispiel von ZnO-Lamellenstrukturen zeigt. Im Bereich der Durchdringungsstellen teilen sich die beiden einander durchdringenden Lamellen das dort befindliche Material, d.h. es ist der Kristallstruktur beider Lamellen zuzurechnen. Eine weitere Möglichkeit ist, dass annährend parallel verlaufende Strukturen "zusammenwachsen".

Diese Durchdringung oder ein Aneinanderwachsen verbindet die Nanobrücken oder Lamellen dauerhaft und ist sehr beständig, auch gegen mechanische Kräfte.
Die Lamellen sind elastisch biegbar, insbesondere auch bei hohen Temperaturen, soweit diese unter jener Temperatur bleiben, bei denen Zinkoxid thermisch zerfällt.

Das gegenseitige Durchdringen von Nanobrücken oder Stacheln kann beispielsweise auftreten, wenn homoepitaktische Bedingungen vorliegen, d.h. wenn die Wachstumsrichtungen der Stacheln unter Winkeln aufeinander treffen, die den Einbau der Kristallstruktur des einen in die Kristallstruktur des anderen verträglich mit der Kristallorientierung zulassen.

Gemessen an der Häufigkeit der Beobachtung solcher Durchdringungen scheint es hier allerdings Toleranzen zu geben, die das Durchdringen begünstigen. Es ist insbesondere möglich, dass es während des kristallinen Wachstums bei Kontakt zu geeigneten Richtungsänderungen kommt. Das kristalline Wachstum und der Durchbringungsprozess sind schwer zu beobachten und derzeit Forschungsgegenstand. Die Durchdringung findet bei verschiedenen Formen der Auswüchse (Lamellen, Stacheln, Fäden etc.) statt, ist aber nicht immer leicht zu erkennen.

Weiterhin ist zu erwarten, dass auch Stacheln ohne feste Kristallstruktur (amorphe Stacheln, Gläser, o. ä.) einander während des Wachstums durchdringen können. Es ist aber noch nicht geklärt, ob dies wahrscheinlicher als die homoepitaktische Durchdringung ist.

Es ist denkbar, dass einzelne Stacheln aus einem Kern bis zu einem benachbarten Kern vordringen und dort direkt in die Kernoberfläche hineinwachsen. Dies konnte bislang nicht direkt beobachtet werden, was aber allein an den Beschränkungen der Beobachtung liegen könnte. In jedem Fall steigt die Wahrscheinlichkeit dafür, dass ein Stachel eines Kerns den Stachel eines Nachbarn kontaktiert und durchdringt, wenn er sich diesem Nachbarn annähert.

Ungeachtet der vorgenannten physikalischen Prozesse, die schwierig zu beobachten sind, ist das Erzielen eines stabilen Endproduktes unproblematisch.
Das Endprodukt weist stets eine sehr große Zahl an Kern-Stachel-Partikeln auf, wobei die flexiblen Stacheln benachbarter Kerne die beschriebene Durchdringung zeigen und die Kerne selbst einander nicht berühren. Die Kerne können deshalb unter Verbiegung der Stacheln gegeneinander bewegt werden. Sie lassen sich aber nur begrenzt auseinander ziehen, da die mikromechanische Verbindung nur durch ein Abreißen der Stacheln gelöst werden kann.

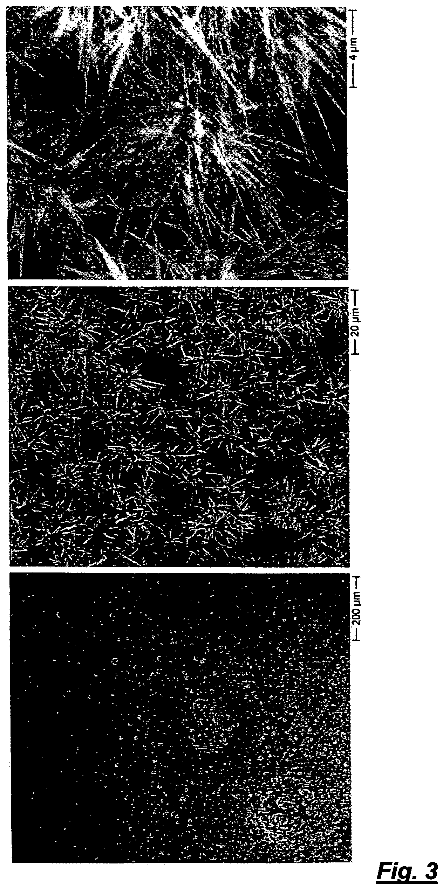

Eine Schicht des erfindungsgemäßen Materials zeigt Fig. 3 in drei verschiedenen Vergrößerungen. Insbesondere die beiden rechten Bilder erinnern an eine Ansammlung von Kletten, allerdings geht hier die Verbindung der Kerne untereinander über das bloße "Verhaken" der erzeugten Stacheln hinaus (entsprechende "Haken" werden nicht gebildet). Die Durchdringung der gewachsenen Stacheln bewirkt den Zusammenhalt.

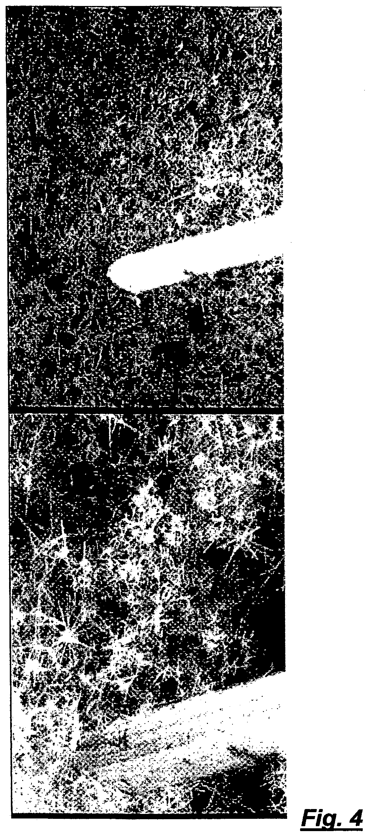

Eine relativ dicke Schicht (mehrere Millimeter, praktisch eine Volumenprobe) ist in zwei Vergrößerungen in Fig. 4 zu sehen. Mit der ebenfalls dort gezeigten Nadel kann das Material gedrückt werden. Es gibt dem mechanischen Druck nach und verteilt die Kraft auf eine größere Umgebung um die Nadelspitze herum. Die Bewegungen der Strukturen sind vergleichbar mit denen eines Dornenbuschs, der mit einem Stock gedrückt wird. Die Struktur in Fig. 4 ist aus Kernen gebildet, deren Durchmesser denen der Stacheln entspricht.

Das erfindungsgemäße Material ist offensichtlich hoch porös. Der Anteil des Porenraums am Volumen beträgt wenigstens 50 % des Materialvolumens, sofern es nicht mit Druck (höher als Normaldruck) beaufschlagt wird. Dann jedoch kann der Porenraum erheblich verringert werden.

Die erzeugte keramische Struktur unterscheidet sich vom Stand der Technik durch ihre eindimensionalen flexiblen Verbindungen. Bisherige poröse Keramiken zeichnen sich durch ein blasenartiges freies Volumen aus, das aus flächigen und daher nicht in allen Raumrichtungen flexiblen Verbindungen besteht und somit keine nennenswert andere Elastizität als eine Halbleiter- oder Keramikvolumenprobe aufweist.

Die bislang erreichten Schichtdicken auf Substraten aus Glas oder oxidierten Silizium-Wafern liegen bei mehreren Millimetern. Bei Entfernung des Substrats ist die Schicht somit ein freitragender, makroskopische Körper. Allerdings haften die Schichten hervorragend auf dem Substrat und lassen sich nur unter massivem Krafteinsatz von diesem abheben. Dabei werden sie leicht zerstört. Dickere Schichten wurden noch nicht realisiert, weil die Prozesskontrolle noch nicht befriedigend geglückt ist. Es werden hier jedoch keine prinzipiellen Hindernisse gesehen.

Es folgt die Beschreibung eines Verfahrens zur Herstellung der Schicht aus Fig. 3.

Zinkpartikel (z.B. Durchmesser = 5 µm) werden mit einem Opferpolymer (z.B. PVB, Polyvinylbutyral) in einem Lösungsmittel des Opferpolymers (z.B. Ethanol) gemischt, wobei verschiedene Mischungsverhältnisse möglich sind, bevorzugt 1:1 bis hin zu 1:5. Dabei wird die Zinkmenge so gewählt, dass ein Gießschlicker entsteht, der auf einem Substrat ausgebreitet oder gegossen werden kann. Das Polymer dient als Abstandshalter, um die Agglomeration der Zinkpartikel zu verhindern und Porenraum für Kompressionen des Materials zu schaffen. Unter Erhitzen in einem Ofen an Raumluft (bei über 400 °C, typischerweise 700°C - 900 °C für Zeiten von 20 Minuten bis 2 Stunden) zersetzt sich das Polymer nahezu rückstandsfrei, während aus den Zinkpartikeln mikroskalige Stacheln aus Zinkoxid (ZnO) herauswachsen, die sich mit den Stacheln benachbarter Partikel verbinden oder direkt in ein benachbartes Partikel wachsen. Das Material besteht danach aus ZnO Partikeln (ggf. mit metallischem Zink im Innern), die durch ihre Stacheln fest miteinander verbunden sind.

Das Beimengen eines Sauerstofflieferanten, beispielsweise Ammoniumperchlorat, zum Opferpolymer kann die Reaktion beschleunigen. Im Extremfall kann sogar das Erwärmen des Materials aus der Reaktion selbst heraus betrieben werden, da die Oxidation von Zink exotherm verläuft.

Ob die Zinkpartikel vollständig in ZnO umgesetzt werden oder ob metallisches Zink im Innern der Partikel verbleibt, hängt hauptsächlich von der Verweildauer des Materials im Ofen ab. Diese kontrolliert insbesondere die Dauer des Kristallwachstums der Stacheln und somit die Stoffumsetzung. Sollte am Ende der Herstellung noch metallisches Zink im Partikel vorhanden sein, so liegt dieses ohnehin eingekapselt in einen ZnO-Mantel vor.

Das Verfahren zur Erzeugung des Materials aus Fig. 4 geht von derselben Mischung wie für Fig. 3 aus. Hier wird die Mischung allerdings im Ofen bei ca. 400 °C in einem Tiegel entzündet, so dass eine den Ofen nahezu ausfüllende Flamme entsteht. Werden seitlich oder oberhalb der Flamme Substrate ausgelegt, bilden sich auf diesen die beschriebenen flexiblen Netzwerke durch den Transport der Stachelpartikel im Gasstrom der Verbrennung und deren Zusammenwachsen bei Zuchttemperaturen.

Zusammenfassend hat es sich als erstaunlich simpel erwiesen, die beschriebenen Strukturen mit einfachen Mitteln als Schichten herzustellen. Gleichwohl sind die physikalischen Vorgänge, die das flexible und zugleich kristalline Netzwerk bilden sehr kompliziert und noch nicht vollständig untersucht. Dies bietet aber noch erheblichen Raum für zukünftige Prozessoptimierungen.

Als Anwendungsmöglichkeiten des neuen Materials sind zwei Beispiele zu nennen:
Das Material haftet ausgezeichnet an Glas, weil es sich durch das Stachelwachstum selbst in mikroporösen Oberflächen (insbes. Keramiken) verankern kann. Zudem können sich Metallpartikel im flüssigen Zustand direkt mit dem Substrat verbinden, wenn sie beim Gießen des Schlickers direkt auf dem Substrat zu liegen kommen und dann im Ofen schmelzen. Es kann daher als hitzebeständiger Klebstoff verwendet werden. Beim Erhitzen von verklebten Materialen treten oft Scherspannungen durch unterschiedliche Ausdehnungskoeffizienten auf. Dieser Kleber ist flexibel und kann die erheblichen Kräfte problemlos aufnehmen.

Ferner können hochtemperaturstabile, elastische mechanische Teile oder Beschichtungen aus solchem Material realisiert werden. Beispielsweise zeigt eine Klemme oder eine Greifvorrichtung, deren Innenflächen mit dem erfindungsgemäßen Material beschichtet sind, einen guten Griff auch bei glatten Oberflächen, ohne diese zu zerkratzen. Die Beschichtung fühlt sich zwar wie Sandpapier an, gibt aber unter Andruck nach, sodass eine Anpassung an die mikroskopische Oberflächenkontur des zu haltenden Objekts erfolgt.

Das erfindungsgemäße elastische Material mit einem auf Partikelebene durch Nanobrücken zwischen Partikeln überbrückten Porenraum, weist insbesondere einen überwiegenden Teil an Nanobrücken auf, die Länge von mehr als dem Zehnfachen des Durchmessers der Nanobrücken aufweist, wobei sich die Partikel durch ein Verbinden der Nanobrücken zu einem makroskopisch elastischen, im 'red-heat' Bereich hitzebeständigen Material verketten, insbesondere weil beim initialen Kristallwachstum die Nanobrücken oder Whisker ineinanderwachsen.

Die einzelnen Partikel, die metallische Kerne aufweisen können, bilden Kerne, die eine Mehrzahl von jeweils in verschiedene Raumrichtungen vom Kern ausgehende, anorganische, flexible, längliche Strukturen aufweisen, die die Kerne auf Abstand voneinander halten, wie Stacheln, wobei die Stacheln und/oder Nanobrücken die Partikel und/oder Kerne aber auch miteinander flexibel verbinden. Diese Verbindung erlaubt, dass die Stacheln und/oder Nanobrücken den Porenraum nach einer Druckbeaufschlagung, die den Porenraum komprimiert, bei Beendigung der Druckbeaufschlagung im Ursprungsvolumen wiederherstellen.

Bevorzugt können die Stacheln und/oder Nanobrücken den Porenraum nach einer Druckbeaufschlagung, die den Porenraum komprimiert, bei Beendigung der Druckbeaufschlagung bei einer Temperatur des elastischen Materials von 600 °C und 1000 °C elastisch in den Ursprungszustand rückverbringen, wobei in einer bevorzugten Güte des Materials der Porenraum in Abwesenheit einer Druckbeaufschlagung (bei Normaldruck) mindestens 50 % des Materialvolumens beträgt.

## Patentansprüche

1. Zinkoxidmaterial, gebildet aus Kernstachelpartikeln, wobei jeder Kernstachelpartikel einen Kern und jeweils in verschiedene Raumrichtungen vom Kern ausgehende Stachel aufweist,
wobei
- der Zusammenhalt der Partikel auf der gegenseitigen Durchdringung von Stacheln benachbarter Partikel während des Kristallwachstums beruht,
- ein Porenraum zwischen den Kernen lediglich von den flexiblen Stacheln unterbrochen und gestützt ist und der Porenraum vollständig zusammenhängend ist und
- das Material ein freitragendes, makroskopisches Netzwerk formt und sich über mehrere Millimeter erstreckt.

2. Zinkoxidmaterial nach Anspruch 1,
**dadurch gekennzeichnet, dass**
eine Mehrzahl der Kerne genau vier Stacheln aufweisen, die jeweils paarweise denselben Winkel miteinander einschließen (Tetrapods).

## Claims

1. A zinc oxide material composed of core-spike particles, wherein each core-spike particle comprises a core and spikes issuing from the core in various spatial directions in each case, wherein
- the cohesion of the particles is based on the interpenetration of spikes of adjacent particles during crystal growth,
- a pore space between the cores is interrupted and supported only by the flexible spikes and the pore space is completely continuous and
- the material forms a self-supporting, macroscopic network and extends over multiple millimetres.

2. The zinc oxide material according to claim 1,
**characterised in that**
a majority of the cores comprise precisely four spikes, which in each case form the same angle with one another in pairs (tetrapods).

## Revendications

1. Matériau à base d'oxyde de zinc, formé par des particules noyaux-pointes, chaque particule noyau-pointes présentant un noyau et des pointes partant chacune du noyau dans des directions différentes de l'espace, dans lequel
la cohésion des particules repose sur l'interpénétration de pointes de particules voisines durant la croissance cristalline,
un espace de pore entre les noyau est interrompu et supporté uniquement par les pointes flexibles et l'espace de pore est entièrement continu/cohérent, et
le matériau forme un réseau macroscopique autoporteur et s'étend sur plusieurs millimètres.

2. Matériau à base d'oxyde de zinc selon la revendication 1, **caractérisé en ce qu**'une majorité des noyaux présentent exactement quatre pointes qui forment entre elles deux à deux le même angle (tétrapode).
